# EUROPEAN PATENT APPLICATION

(11) **EP 1 542 034 A1**
(43) Date of publication of application: **15.06.2005**
(21) Application number: 04256556.4
(22) Date of filing: 23.10.2004
(51) Int. Cl.: G01S 13/02, G01S 7/03, G01S 13/93

(54) **Marine radar system**

(30) Priority: 09.12.2003 GB 0328457
(71) Applicant: Smiths Group PLC, London NW11 8DS (GB)
(72) Inventor: Taylor, Martin Stuart, Chelmsford, Essex CM1 4QR (GB)
(74) Representative: Flint, Jonathan McNeill

(57) **Abstract**

A radar system for a marine vessel 1" has an antenna unit 4" mounted at the top of a mast 2" and a radar display 11" at a remote location 3". The antenna unit 4" comprises an outer housing 12" containing: an antenna 5", a motor 7" and gearbox 6" to rotate the antenna to scan in azimuth, a transceiver 8" connected to receive radar signals from the antenna and an analogue-to-digital converter 13". Digital signals from the converter 13" are supplied down the mast 2" via cabling 9", which extends to a processor 10" adjacent the display 11". The processor 10" converts the digital signals into a form for display.

## Description

This invention relates to marine radar systems of the kind including an antenna, a motor for rotating the antenna to scan in azimuth, a transceiver for receiving radar signals from the antenna, an analogue-to-digital converter connected with the transceiver and a processor by which the radar signals are converted to a form for display.

International regulations now require vessels greater than 300 gross tonnage to be fitted with marine navigation radar. Often much smaller vessels also carry navigation radar.

Marine radar systems comprise an antenna mounted at the top of a mast with a motor and gearbox to rotate the antenna about a vertical axis, to scan in azimuth. A transceiver provides the microwave signal propagated by the antenna and also is supplied with signals received by the antenna. The transceiver converts the received signals into analogue electrical signals, which are then supplied to a processor for digitisation and display.

In a so-called "upmast" system, the transceiver is mounted directly under the antenna at the top of the mast. The transceiver supplies analogue radar information signals via a cable down the mast to a remote processor unit, which converts the signals to a digital form for display. Separate lines in the cabling are used to control the motor, to supply video, sync and heading information.

In a so-called "downmast" system, the transceiver is mounted separately from the antenna, usually in an electronics room or the like where it is readily accessible. The transceiver is connected to the antenna by a flexible or solid waveguide, or by a low-loss coaxial cable. Again, the analogue output of the transceiver is converted to digital form for display purposes.

Both these systems have disadvantages in that they require special forms of cabling and connections to ensure low loss and immunity to interference.

It is an object of the present invention to provide an alternative radar system.

According to one aspect of the present invention there is provided a marine radar system of the above-specified kind, characterised in that both the transceiver and the analogue-to-digital converter are mounted adjacent the antenna, that the processor is mounted at a remote location, and that cabling connects the processor to receive an output of the converter.

The motor, the transceiver and the analogue-to-digital converter are preferably contained within a common housing. The antenna and housing are preferably arranged for mounting towards the top of a mast.

According to another aspect of the present invention there is provided a radar system including an antenna unit including an antenna, a processor remote from the antenna unit and a display connected to receive an output from the processor, characterised in that the antenna unit includes a transceiver for receiving radar signals from the antenna, apparatus for scanning the antenna in azimuth and a converter for converting signals received by the antenna into digital form for supply via cabling to the processor.

The antenna unit may have an outer housing enclosing the scanning apparatus, transceiver and converter. The scanning apparatus preferably includes an electric motor and a gearbox.

According to a third aspect of the present invention there is provided a marine vessel including a radar antenna mounted on an elevated, exposed structure of the vessel, a motor mounted with the antenna for rotating the antenna in azimuth, a transceiver coupled with and adjacent the antenna, an analogue-to-digital converter, a processor and a display, characterised in that the analogue-to-digital converter is mounted adjacent the antenna and is connected with the transceiver to provide a digital output, that the vessel includes cabling connected electrically with the analogue-to-digital converter and extending from adjacent the antenna to a remote location, and that the processor and display are located at the remote location and are adapted to receive digital signals from the cabling.

Two conventional marine vessel radar systems and a novel system according to the present invention will now be described, by way of example, with reference to the accompanying drawings, in which:
- Figure 1: is a schematic diagram showing a conventional upmast transceiver system;
- Figure 2: is a schematic diagram showing a conventional downmast transceiver system; and
- Figure 3: is a schematic diagram of the system of the present invention.

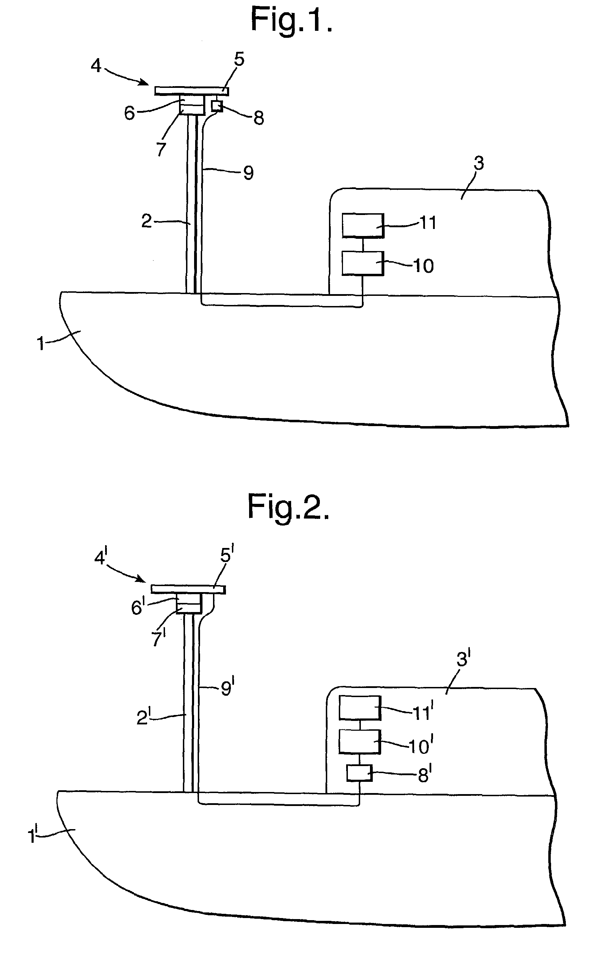

With reference first to Figure 1 there is shown a marine vessel 1 with a mast 2 and an enclosed structure such as a bridge 3. An antenna unit 4 is secured at the top of the mast 2, the unit comprising an antenna 5 coupled with a gearbox 6, which is driven by an electrical motor 7. The unit 4 also includes a transceiver 8 coupled with the antenna 5 for supply of microwave energy to and from the antenna. The transceiver 8, therefore, is also mounted towards the top of the mast 2. The transceiver 8 produces an analogue electrical output and is connected to one end of cabling 9, which includes dedicated lines for control of the motor and separate lines for video, sync and heading line information. The cabling 9 extends down the mast 2 and through the vessel 1 to the structure 3 where it connects with a processing unit 10. The processing unit 10 provides an output to a display 11 or other utilisation means such as a store, voyage data recorder or the like. Because the analogue signal has to be transmitted a relatively long distance, the cabling must have a low resistance, making it relatively thick and inflexible. Interconnections with the cabling also present problems because of the need to minimize losses. Suitable cabling is expensive, is difficult to install and requires special connectors.

Many of the features of the system shown in the downmast system of Figure 2 are common to the system of Figure 1 so have been given the same reference number with the addition of a prime'. In the system of Figure 2, the unit 4' including the antenna 5', gearbox 6' and motor 7' is mounted at the top of the mast 2', as in the upmast system of Figure 1. The system of Figure 2 differs in that the transceiver 8' is not included in the antenna unit 4' and is not mounted up the mast 2' but instead is mounted in the structure 3'. The transceiver 8' is interconnected with the antenna 5' by cabling 9' in the form of a low-loss coaxial cable, or by means of a flexible or solid waveguide with additional control and signal cables. The need to provide such a length of coaxial cable or waveguide is a disadvantage but it does mean that the electronics can be located where access for maintenance is easier.

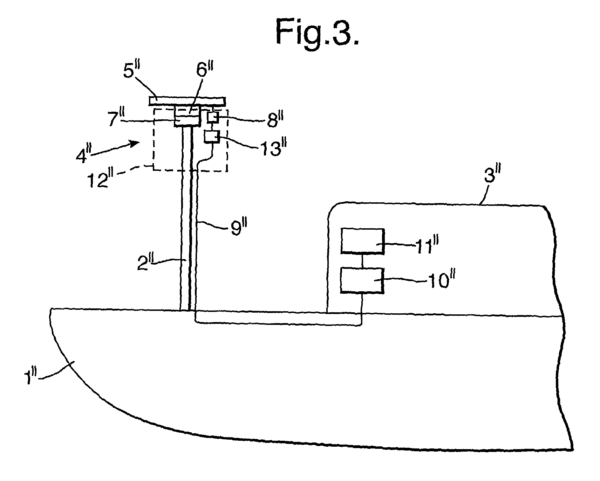

With reference now to Figure 3, the system according to the present invention will now be described and, because many of the features are common with those in the system of Figure 1 they have been given the same reference numeral with the addition of two primes ". The system has an antenna unit 4" with an outer housing 12''mounted at the top of the mast 2" or some other elevated, exposed structure of the vessel 1". The unit 4" includes an antenna 5" and the housing 12" contains a gearbox 6" and an electrical motor 7" coupled with the antenna and by which the antenna is rotated and scanned in azimuth. The housing 12" also contains the transceiver 8", which is mounted on the antenna 5" to rotate with it. The transceiver 8" produces an analogue electrical output and is electrically connected with an analogue-to-digital converter 13" also contained within the housing 12". The converter 13" provides a digitally-encoded output in some suitable protocol such as ethernet. The output of the converter 13" connects with one end of a Cat-5 network cable 9" or some other similar cabling. The cable 9" extends from the housing down the mast 2" to a processor unit 10" within the structure 3". The processor unit 10" provides an output to the display 11" or other utilisation means.

The signal from the antenna unit 4" is in digital form so it can be transmitted along a lightweight, flexible cable 9" relatively large distances with high reliability. It also enables the output of the antenna to connect to a local area network or other databus along with digital information from other sources.

The antenna unit need not have an outer housing. Instead, the transceiver and analogue-to-digital converter could be exposed and mounted adjacent one another, adjacent the antenna. Instead of an electrical output, the analogue-to-digital converter could provide an optical output and the cable could include a fibre-optic cable.

## Claims

1. A marine radar system including an antenna (5 "), a motor (7") for rotating the antenna to scan in azimuth, a transceiver (8 ") for receiving radar signals from the antenna, an analogue-to-digital converter (13") connected with the transceiver and a processor (10") by which the radar signals are converted to a form for display, **characterised in that** both the transceiver (8") and the analogue-to-digital converter (13") are mounted adjacent the antenna (5"), that the processor (10") is mounted at a remote location (3"), and that cabling (9") connects the processor to receive an output of the converter.

2. A marine radar system according to Claim 1, **characterised in that** the motor (7"), the transceiver (8") and the analogue-to-digital converter (13") are contained within a common housing (12").

3. A marine radar system according to Claim 2, **characterised in that** the antenna (5") and housing (12") are arranged for mounting towards the top of a mast (2'').

4. A radar system including an antenna unit (4") including an antenna (5"), a processor (10") remote from the antenna unit and a display (11 ") connected to receive an output from the processor (10"), **characterised in that** the antenna unit (4") includes a transceiver (8") for receiving radar signals from the antenna (5 "), apparatus (7") for scanning the antenna in azimuth and a converter (13") for converting signals received by the antenna into digital form for supply via cabling (9") to the processor (10").

5. A radar system according to Claim 4, **characterised in that** the antenna unit (4") includes an outer housing (12") enclosing the scanning apparatus (7"), transceiver (8") and converter (13").

6. A radar system according to Claim 4 or 5, **characterised in that** the scanning apparatus includes an electric motor (7") and a gearbox (6").

7. A marine vessel (1") including a radar antenna (5 ") mounted on an elevated, exposed structure (2") of the vessel, a motor (7") mounted with the antenna (5 ") for rotating the antenna in azimuth, a transceiver (8") coupled with and adjacent the antenna, an analogue-to-digital converter (13"), a processor (10") and a display (11"), **characterised in that** the analogue-to-digital converter (13") is mounted adjacent the antenna (5 ") and is connected with the transceiver (8 ") to provide a digital output, that the vessel (1") includes cabling (9") connected electrically with the analogue-to-digital converter (13 ") and extending from adjacent the antenna (5 ") to a remote location, and that the processor (10") and display (11") are located at the remote location and are adapted to receive digital signals from the cabling (9").
